# FASCICULE DE BREVET EUROPEEN

(11) **EP 4 301 050 B1**
(45) Date de publication et mention de la délivrance du brevet: **01.05.2024**
(21) Numéro de dépôt: 23182815.3
(22) Date de dépôt: 30.06.2023
(51) Int. Cl.: H04W 48/20, H04W 36/08, H04W 36/22, H04W 84/12, H04W 36/38

(54) **PROCÉDÉ DE GESTION DE LA CONNEXION D'UN ÉQUIPEMENT UTILISATEUR À UN RÉSEAU DE COMMUNICATION SANS FIL DISTRIBUÉ**
VERFAHREN ZUR VERWALTUNG DER VERBINDUNG EINES BENUTZERGERÄTS MIT EINEM VERTEILTEN DRAHTLOSKOMMUNIKATIONSNETZWERK
METHOD FOR MANAGING THE CONNECTION OF A USER EQUIPMENT TO A DISTRIBUTED WIRELESS COMMUNICATION NETWORK

(30) Priorité: 30.06.2022 FR 2206689
(43) Date de publication de la demande: 03.01.2024
(73) Titulaire: Sagemcom Broadband SAS, 92270 Bois-Colombes (FR)
(72) Inventeur: LE ROUX, Sylvain, 92500 RUEIL MALMAISON (FR)
(74) Mandataire: Regimbeau

(56) Documents cités:
- FR-A1- 3 105 681
- US-A1- 2017 135 033

## Description

### DOMAINE DE L'INVENTION

La présente invention concerne la gestion des connexions des équipements utilisateurs aux réseaux de communication sans fil distribués, plus particulièrement aux réseaux de communication sans fil distribués conformes à l'une des normes IEEE 802.11 (*« Institute of Electrical and Electronics Engineers* » en anglais), communément appelés réseaux « Wi-Fi ».

### ARRIERE-PLAN TECHNOLOGIQUE

Un réseau de communication sans fil (ci-après « réseau ») conforme à l'une des normes IEEE 802.11 comprend typiquement une pluralité de noeuds. Chaque noeud est un dispositif électronique comprenant à minima un module radiofréquence permettant l'établissement de communications sans fil conformément à l'une des normes IEEE 802.11, ou dit autrement, conformément à l'une des normes Wi-Fi. Un tel réseau comprend typiquement un noeud d'accès (ou de collecte), communément appelé « point d'accès » (« Access Point » en anglais, ou « AP ») et une pluralité de noeuds clients, également appelés « noeud utilisateurs », « équipements clients », « équipements utilisateurs » ou « stations », pouvant établir des connexions sans fil avec le noeud d'accès et/ou entre eux. Dans un environnement résidentiel, le noeud d'accès est typiquement intégré à une « box » fournie par un opérateur Internet, c'est-à-dire à un équipement intégrant également une passerelle domestique (« *home gateway* », ou « *residential gateway »,* en anglais) pour la connexion du réseau Wi-Fi à un réseau étendu (« *Wide Area Network* » en anglais, ou « WAN »), typiquement Internet. Les équipements utilisateurs sont typiquement des ordinateurs, télévisions, tablettes ou mobiles multifonction (« *smartphones* » en anglais). On dit ainsi communément que les dispositifs électroniques utilisateurs sont associés ou connectés « *en Wi-Fi* » avec le noeud d'accès.

L'architecture d'un réseau Wi-Fi peut aussi être une architecture dite distribuée, afin par exemple d'étendre la portée du réseau sans fil ou d'augmenter ses performances, par l'utilisation d'une pluralité de noeuds d'accès. L'architecture d'un réseau Wi-Fi distribuée comprend typiquement deux réseaux :
- un premier réseau dit de collecte (« *backhaul* » en anglais), permettant de relier les noeuds d'accès entre eux et de constituer une infrastructure réseau suivant une architecture réseau de type mixte étoile et/ou chaine, ce réseau de collecte pouvant être un réseau sans-fil (par exemple Wi-Fi), un réseau filaire (par exemple Ethernet) ou un mélange des deux, et
- un deuxième réseau dit utilisateur (ou client) *(« fronthaul* » en anglais), permettant une connexion sans fil des équipements utilisateurs au réseau Wi-Fi distribué.

Dans un tel réseau sans fil distribué, un équipement utilisateur peut se retrouver dans une situation où il est à portée de signal de plusieurs noeuds d'accès et peut donc établir une connexion sans fil avec chacun de ces noeuds d'accès. Dans une telle situation, l'équipement utilisateur cherche par défaut à établir une connexion sans fil avec le noeud d'accès dont le signal radio est reçu avec la plus forte puissance par le noeud client, ce qui n'est pas toujours le choix optimal du point de vue du réseau de communication distribué. En effet, le noeud d'accès choisi par l'équipement utilisateur pour se connecter peut certes être celui-ci offrant la meilleure qualité de réception du signal radio, mais ce noeud d'accès peut être par ailleurs surchargé en termes de nombre d'équipements utilisateurs déjà connectés ou de trafic de collecte transitant par ce noeud. Il pourrait être optimal dans ce cas que l'équipement utilisateur se connecte à un autre noeud d'accès moins chargé même si ce dernier offre a priori une moins bonne qualité de signal radio.

Pour pallier ce manque de fonctionnalité de type « transfert de connexion » (ou *« handover* » en anglais) dans un réseau de communication de type Wi-Fi, des solutions ont été proposées et sont par exemple décrites dans les documents FR 3 083 409 et FR 3 086 826 pour forcer un équipement utilisateur à se connecter à un noeud d'accès choisi par un noeud de gestion du réseau de communication sans fil distribué. Dans ces solutions connues, l'arbitrage effectué par le noeud de gestion pour désigner le noeud d'accès auquel devra se connecter l'équipement utilisateur repose typiquement sur un algorithme de calcul du plus court chemin, comme par exemple l'algorithme de Dijkstra, dans lequel chaque lien utilisateur (entre l'équipement utilisateur et un noeud d'accès) et chaque chemin de collecte (entre le noeud d'accès et un noeud racine typiquement constitué par la passerelle domestique) est caractérisé par un poids représentatif de la qualité ou de la préférence accordée audit lien/chemin. Cependant, selon leur dimensionnement, les poids associés aux chemins de collecte sont soit trop soit insuffisamment pénalisants relativement aux poids associés aux liens utilisateurs.

US2017135033 divulgue un procédé permettant la sélection par un client "wireless" d'un noeud d'accès au sein d'un réseau WLAN de type Mesh.

FR3105681 divulgue un procédé et un dispositif de détermination d'une topologie d'un réseau de communication composé d'une pluralité de noeuds connectés, ou non, respectivement à au moins un équipement, un des noeuds dit noeud racine étant relié à un réseau extérieur.

### EXPOSE DE L'INVENTION

Un objectif de l'invention est d'améliorer la détermination du noeud d'accès auquel un équipement utilisateur peut se connecter dans le contexte d'un réseau sans fil distribué.

A cet effet, l'invention a pour objet, selon un premier aspect, un procédé de gestion de la connexion d'un équipement utilisateur à un réseau de communication sans fil distribué, ledit réseau de communication sans fil distribué comprenant un noeud racine, une pluralité de noeuds d'accès chacun apte à établir une connexion sans fil avec l'équipement utilisateur, et un réseau de collecte pour l'acheminement de données entre le noeud racine et les noeuds d'accès, le procédé de gestion comprenant les étapes suivantes :
- a) classement des noeuds d'accès dans différents groupes en fonction d'un indicateur primaire représentatif de leur qualité de connexion au noeud racine, chaque groupe regroupant des noeuds d'accès ayant des indicateurs primaires proches les uns des autres,
- b) sélection d'un premier groupe parmi lesdits groupes, et
pour au moins un noeud d'accès compris dans le groupe sélectionné :
- c) détermination d'un indicateur secondaire associé audit noeud d'accès, ledit indicateur secondaire étant représentatif d'une qualité de connexion de l'équipement utilisateur au noeud d'accès,
- d) comparaison de l'indicateur secondaire à un seuil, et
si l'indicateur secondaire est inférieur ou égal au seuil :
- e) désignation du noeud d'accès pour la connexion de l'équipement utilisateur au réseau de communication sans fil distribué,
si, pour chaque noeud d'accès compris dans le groupe sélectionné, l'indicateur secondaire est strictement supérieur au seuil :
- f) répétition des étapes b) à e) avec un deuxième groupe regroupant des noeuds d'accès ayant une qualité de connexion au noeud racine moindre que celle des noeuds d'accès du premier groupe.

Selon des modes de réalisation particuliers de l'invention, le procédé de gestion selon le premier aspect présente également l'une ou plusieurs des caractéristiques suivantes, prise(s) isolément ou suivant toute(s) combinaison(s) techniquement possible(s) :
- est associée à chaque groupe une donnée représentative de la qualité de connexion au noeud racine des noeuds d'accès qu'il regroupe, et le seuil est un seuil variable qui est fonction de la donnée représentative associée au groupe auquel appartient le noeud d'accès ;
- le seuil variable est une fonction croissante de la qualité de connexion des noeuds d'accès au noeud racine ;
- le procédé de gestion comprend les étapes supplémentaires suivantes :
   - g) initialisation d'un premier compteur à une première valeur d'initialisation,
   - h) détermination du seuil, le seuil étant un seuil variable fonction du premier compteur, et
   si, pour une valeur donnée du premier compteur, l'indicateur secondaire associé à chaque noeud d'accès de chaque groupe sélectionné est strictement supérieur au seuil :
   - i) incrémentation du premier compteur, et
   - j) répétition des étapes h), b) à f) et i) avec la valeur incrémentée du premier compteur ;
- le procédé de gestion comprend, préalablement à l'étape i), une étape m) de comparaison de la valeur du premier compteur à une valeur maximale prédéterminée, l'étape i) n'étant mise en oeuvre que si la valeur du premier compteur est strictement inférieure à la valeur maximale ;
- le procédé de gestion comprend les étapes supplémentaires suivantes :
   - n) initialisation d'un deuxième compteur à une deuxième valeur d'initialisation, et
   - o) préalablement à l'étape f) de répétition des étapes b) à e), incrémentation du deuxième compteur,

   l'étape n) étant répétée lors de la mise en oeuvre de l'étape j),
   le deuxième compteur étant lié aux données représentatives associées aux groupes par une fonction monotone telle que la qualité de connexion des noeuds d'accès au noeud racine aille décroissante à mesure que le deuxième compteur augmente, l'étape b) de sélection de groupe comprenant la sélection d'un groupe dont la donnée représentative est l'image de la valeur du deuxième compteur par ladite fonction monotone ;
- le procédé de gestion comprend, préalablement à l'étape o) d'incrémentation du deuxième compteur, une étape p) de comparaison de la valeur du deuxième compteur à la valeur du premier compteur, les étapes o) d'incrémentation du deuxième compteur et f) de répétition des étapes b) à e) n'étant mises en oeuvre que lorsque la valeur du deuxième compteur est strictement inférieure à la valeur du premier compteur, ladite étape p) de comparaison étant sinon suivie de l'étape i) d'incrémentation du premier compteur ou, le cas échéant, de l'étape m) de comparaison de la valeur du premier compteur à la valeur maximale prédéterminée ; et
- le procédé de gestion comprend, préalablement à l'étape b) de sélection, une étape q) de comparaison du seuil variable avec un seuil maximal prédéterminé, les étapes b) à e) n'étant mises en oeuvre que lorsque le seuil variable est strictement inférieur au seuil maximal prédéterminé, ladite étape q) de comparaison étant sinon suivie de l'étape f) de répétition des étapes b) à e) ou, le cas échéant, de l'étape o) d'incrémentation du deuxième compteur ou, le cas échéant, de l'étape p) de comparaison de la valeur du deuxième compteur à la valeur du premier compteur.

L'invention a également pour objet, selon un deuxième aspect, un procédé de gestion de la connexion d'un équipement utilisateur à un réseau de communication sans fil distribué, ledit réseau de communication sans fil distribué comprenant un noeud racine, une pluralité de noeuds d'accès chacun apte à établir une connexion sans fil avec l'équipement utilisateur, et un réseau de collecte pour l'acheminement de données entre le noeud racine et les noeuds d'accès, le procédé de gestion comprenant les étapes suivantes :
- a) classement des noeuds d'accès dans différents groupes en fonction d'un indicateur primaire représentatif de leur qualité de connexion au noeud racine, chaque groupe regroupant des noeuds d'accès ayant des indicateurs primaires proches les uns des autres,
- b) ordonnancement des groupes en fonction des qualités de connexion au noeud racine des noeuds d'accès qu'ils regroupent et attribution d'un numéro d'ordre à chaque groupe, le numéro d'ordre allant croissant à mesure que la qualité de connexion des noeuds d'accès composant le groupe au noeud racine est dégradée,
- c) initialisation d'un premier compteur à une première valeur d'initialisation,
- d) initialisation d'un deuxième compteur à une deuxième valeur d'initialisation,
- e) comparaison d'un seuil variable, fonction des valeurs des premier et deuxième compteurs, avec un seuil maximal prédéterminé,
si le seuil variable est strictement inférieur au seuil maximal prédéterminé et s'il existe un groupe non-vide ayant un numéro d'ordre égal à la valeur du deuxième compteur, pour au moins un noeud d'accès compris dans ledit groupe :
- f) détermination d'un indicateur secondaire représentatif d'une qualité de connexion de l'équipement utilisateur au noeud d'accès,
- g) comparaison de l'indicateur secondaire au seuil variable, et
si l'indicateur secondaire est inférieur ou égal au seuil variable :
- h) désignation du noeud d'accès pour la connexion de l'équipement utilisateur au réseau de communication sans fil distribué,
si, pour chaque noeud d'accès compris dans le groupe, l'indicateur secondaire est strictement supérieur au seuil variable, ou s'il n'existe pas de groupe non-vide ayant un numéro d'ordre égal à la valeur du deuxième compteur, ou si le seuil variable est supérieur ou égal au seuil maximal prédéterminé :
- i) comparaison de la valeur du deuxième compteur à la valeur du premier compteur, et
si la valeur du deuxième compteur est strictement inférieure à la valeur du premier compteur :
- j) incrémentation du deuxième compteur, et
- k) répétition des étapes e) à k),
si la valeur du deuxième compteur est supérieure ou égale à la valeur du premier compteur :
- l) comparaison de la valeur du premier compteur à une valeur maximale prédéterminée, et
si la valeur du premier compteur est strictement inférieure à la valeur maximale :
- m) incrémentation du premier compteur, et
- n) répétition des étapes d) à n).

Selon des modes de réalisation particuliers de l'invention, le procédé de gestion selon le premier ou le deuxième aspect présente également l'une ou plusieurs des caractéristiques suivantes, prise(s) isolément ou suivant toute(s) combinaison(s) techniquement possible(s) :
- chaque noeud d'accès est classé dans un unique groupe ;
- le procédé de gestion est exécuté par un noeud de gestion du réseau de communication sans fil distribué ;
- le seuil variable est une fonction croissante de la valeur du premier compteur ;
- le seuil variable est une fonction décroissante de la valeur du deuxième compteur ;
- le seuil variable est égal à *S_{B}* + *(p* - *q)* × *P,* où S_{B} est un seuil minimal prédéterminé, p est la valeur du premier compteur, q est la valeur du deuxième compteur, et P est un pas prédéterminé ;
- le seuil variable est égal à *S_{B}* + *(p* - *q)* × *P,* où S_{B} est un seuil minimal prédéterminé, p est la valeur du premier compteur, q est la valeur du deuxième compteur, et P est un pas fonction de la valeur du premier compteur et/ou de la valeur du deuxième compteur ;
- le pas est égal à *(p* - q) × *P*₀*,* où Po est une constante prédéterminée ;
- la deuxième valeur d'initialisation est égale à la première valeur d'initialisation ;
- l'indicateur secondaire est fonction de l'indication de l'intensité du signal reçu de l'équipement utilisateur vis-à-vis du noeud d'accès ;
- le réseau de collecte comprend une pluralité de liens reliant les noeuds d'accès entre eux et au noeud racine, chaque lien reliant directement un premier noeud parmi les noeuds d'accès et le noeud racine à un deuxième noeud parmi les noeuds d'accès et le noeud racine, chaque noeud d'accès étant relié au noeud racine par un chemin de collecte constitué par au moins un desdits liens, l'indicateur primaire étant fonction du nombre de liens constituant ledit chemin de collecte ou d'une combinaison linéaire de grandeurs représentatives des qualités de connexion des liens constituant ledit chemin de collecte ;
- l'indicateur primaire est fonction d'un débit maximal mesuré entre le noeud d'accès et le noeud racine ;
- chaque noeud d'accès est classé dans un unique groupe ; et
- le réseau de communication sans fil distribué est conforme à l'une des normes IEEE 802.11.

L'invention a encore pour objet, selon un troisième aspect, un noeud de gestion d'un réseau de communication sans fil distribué, ledit réseau de communication sans fil distribué comprenant un noeud racine, une pluralité de noeuds d'accès chacun apte à établir une connexion sans fil avec un équipement utilisateur, et un réseau de collecte pour l'acheminement de données entre le noeud racine et les noeuds d'accès, le noeud de gestion étant configuré pour exécuter les étapes d'un procédé de gestion selon le premier ou le deuxième aspect.

Selon un mode de réalisation particulier de l'invention, le noeud de gestion présente également la caractéristique suivante :
- le réseau de communication sans fil distribué est conforme à l'une des normes IEEE 802.11.

Selon un quatrième aspect, l'invention a pour objet un réseau de communication sans fil distribué comprenant un noeud racine, une pluralité de noeuds d'accès chacun apte à établir une connexion sans fil avec un équipement utilisateur, et un réseau de collecte pour l'acheminement de données entre le noeud racine et les noeuds d'accès, le noeud racine et/ou les noeuds d'accès comprenant un noeud de gestion configuré pour exécuter les étapes d'un procédé de gestion selon le premier ou le deuxième aspect.

Selon un mode de réalisation particulier de l'invention, le réseau de communication sans fil distribué présente également la caractéristique suivante :
- le réseau de communication sans fil distribué est conforme à l'une des normes IEEE 802.11.

Selon un cinquième aspect, l'invention a pour objet un produit programme d'ordinateur comprenant des instructions pour la mise en oeuvre, par un processeur d'un noeud de gestion d'un réseau de communication sans fil distribué comprenant un noeud racine, une pluralité de noeuds d'accès chacun apte à établir une connexion sans fil avec un équipement utilisateur, et un réseau de collecte pour l'acheminement de données entre le noeud racine et les noeuds d'accès, d'un procédé de gestion selon le premier ou le deuxième aspect lorsque le produit programme d'ordinateur est exécuté par le processeur.

Enfin, selon un sixième aspect, l'invention a pour objet un support d'enregistrement lisible par un noeud de gestion d'un réseau de communication sans fil distribué sur lequel est stocké un produit programme d'ordinateur tel que défini ci-dessus.

### BREVE DESCRIPTION DES FIGURES

D'autres caractéristiques et avantages de l'invention apparaîtront à la lecture de la description qui va suivre, donnée uniquement à titre d'exemple et faite en se référant aux dessins annexés, dans lesquels :
- la Figure 1 est un schéma de l'architecture d'un réseau de communication sans fil distribué selon un exemple de réalisation de l'invention,
- la Figure 2 est un schéma de l'architecture matérielle d'un noeud de gestion du réseau de la Figure 1,
- la Figure 3 est un diagramme illustrant un procédé de gestion de la connexion d'un équipement utilisateur au réseau de la Figure 1, exécuté par le noeud de gestion de la Figure 2, et
- les Figures 4 à 12 sont des schémas illustrant différentes itérations d'une étape du procédé de la Figure 3 de comparaison entre un indicateur secondaire représentatif d'une qualité de connexion de l'équipement utilisateur à un noeud d'accès du réseau de la Figure 1 et un seuil variable fonction de l'itération.

### DESCRIPTION DETAILLEE D'UN EXEMPLE DE REALISATION

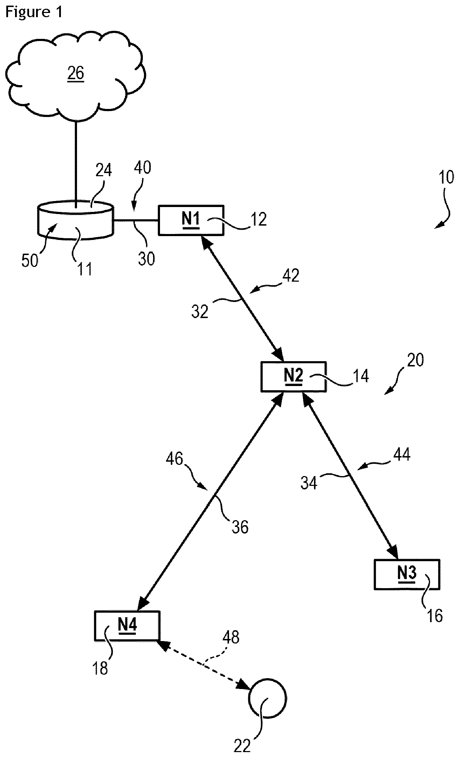

Le réseau de communication sans fil distribué 10 représenté à la Figure 1 comprend un noeud racine 11, une pluralité de noeuds d'accès 12, 14, 16, 18 et un réseau de collecte 20. Il comprend également un équipement utilisateur 22.

Le noeud racine 11 est constitué par un dispositif électronique fournissant un service destiné à l'équipement utilisateur 12. Dans l'exemple représenté, ce noeud racine 11 est constitué par une passerelle 24 (ou « *gateway »* en anglais) permettant une interconnexion du réseau 10 avec un réseau étendu 26, par exemple le réseau Internet. En variante (non représentée), le noeud racine 11 est constitué par un dispositif électronique fournissant un autre service, par exemple un serveur de stockage en réseau (« *Network Attached Storage »* en anglais, ou NAS).

Chaque noeud d'accès 12, 14, 16, 18 est constitué par un dispositif électronique apte à établir une connexion sans fil avec l'équipement utilisateur 22. Chaque noeud d'accès 12, 14, 16, 18 gère ainsi un réseau utilisateur de communication sans fil dédié à la connexion d'équipements utilisateurs tels que l'équipement utilisateur 22 au noeud d'accès 12, 14, 16, 18, de façon similaire à un réseau de communication sans fil non distribué dont il constitue le point d'accès. A cet effet, chaque noeud d'accès 12, 14, 16, 18 comprend un module radiofréquence (non représenté) permettant l'établissement de communications sans fil. Ce module radiofréquence est de préférence configuré pour permettre l'établissement de communications sans fil conformément à l'une des normes IEEE 802.11, le réseau de communication sans fil distribué 10 étant alors conforme à l'une des normes IEEE 802.11.

Chaque noeud d'accès 12, 14, 16, 18 comprend typiquement un agent Wi-Fi EasyMesh^{™}.

Le réseau de collecte 20 est destiné à l'acheminement de données entre le noeud racine 11 et les noeuds d'accès 12, 14, 16, 18. Il est formé par le noeud racine 11 et les noeuds d'accès 12, 14, 16, 18 et comprend une pluralité de liens 30, 32, 34, 36 reliant les noeuds d'accès 12, 14, 16, 18 entre eux et au noeud racine 11. Chaque lien 30, 32, 34, 36 est constitué par une connexion établie et active entre un premier noeud parmi les noeuds d'accès 12, 14, 16, 18 et le noeud racine 11 et un deuxième noeud parmi les noeuds d'accès 12, 14, 16, 18 et le noeud racine 11, et relie directement ledit premier noeud audit deuxième noeud, c'est-à-dire sans transiter par un autre noeud. Ce lien 30, 32, 34, 36 est filaire, par exemple un lien Ethernet, ou sans fil, par exemple Wi-Fi.

Dans l'exemple représenté, les liens 30, 32, 34, 36 comprennent un premier lien 30 reliant un premier noeud d'accès 12 au noeud racine 11, un deuxième lien 32 reliant un deuxième noeud d'accès 14 au premier noeud d'accès 12, un troisième lien 34 reliant un troisième noeud d'accès 16 au deuxième noeud d'accès 14, et un quatrième lien 36 reliant un quatrième noeud d'accès 18 au deuxième noeud d'accès 14. Le premier lien 30 est par exemple constitué par un lien filaire, typiquement Ethernet, les autres liens 32, 34, 36 étant constitués par des liens sans fil, typiquement Wi-Fi.

A chaque lien 30, 32, 34, 36 est associée une grandeur représentative d'une qualité de connexion dudit lien 30, 32, 34, 36. Cette grandeur représentative est typiquement constituée par l'affaiblissement de signaux sur ledit lien 30, 32, 34, 36, cet affaiblissement de signaux étant typiquement régulièrement mesuré par l'un des noeuds 11, 12, 14, 16, 18 reliés par ledit lien 30, 32, 34, 36. Ici, cet affaiblissement est par exemple négligeable pour le premier lien 30 et égal à 63 dB pour le deuxième lien 32, à 70 dB pour le troisième lien 34 et à 75 dB pour le quatrième lien 36. En variante, cette grandeur est constituée par l'indication de l'intensité du signal reçu (en anglais « *Received Signal Strength Indication »* ou « *RSSI* ») du lien 30, 32, 34, 36 si celui-ci est un lien sans-fil ou la valeur 0 si c'est un lien filaire. En variante encore, cette grandeur est constituée par le débit maximal dudit lien 30, 32, 34, 36 tel que déterminé par une mesure à un instant donné (test de débit local).

Le réseau de collecte 20 définit, pour chaque noeud d'accès 12, 14, 16, 18 un chemin de collecte 40, 42, 44, 46 reliant le noeud d'accès 12, 14, 16, 18 au noeud racine 11, ce chemin de collecte 40, 42, 44, 46 étant constitué par au moins un des liens 30, 32, 34, 36. Dans l'exemple représenté, on a ainsi :
- un premier chemin de collecte 40, constitué par le seul premier lien 30, reliant le premier noeud d'accès 12 au noeud racine 11,
- un deuxième chemin de collecte 42, constitué par les premier et deuxième liens 30, 32, reliant le deuxième noeud d'accès 14 au noeud racine 11,
- un troisième chemin de collecte 44, constitué par les premier, deuxième et troisième liens 30, 32, 34, reliant le troisième noeud d'accès 16 au noeud racine 11, et
- un quatrième chemin de collecte 46, constitué par les premier, deuxième et quatrième liens 30, 32, 36, reliant le quatrième noeud d'accès 18 au noeud racine 11.

Les deuxième, troisième et quatrième chemins de collecte 42, 44, 46 constituent ainsi des chemins chaînés constitués de plusieurs liens 30, 32, 34, 36.

A chaque chemin de collecte 40, 42, 44, 46 est associée une grandeur représentative d'une qualité de connexion dudit chemin de collecte 40, 42, 44, 46. Cette grandeur représentative est typiquement constituée par un débit maximal de données sur ledit chemin de collecte 40, 42, 44, 46. Ce débit maximal est typiquement régulièrement mesuré par le noeud d'accès 12, 14, 16, 18 associé et/ou par le noeud racine 11.

On notera que bien que, dans l'exemple représenté, le noeud racine 11 soit représenté distinct du premier noeud d'accès 12, lesdits noeuds 11, 12 sont préférentiellement intégrés au sein d'un seul et même dispositif électronique (non représenté), ledit dispositif électronique comprenant les fonctionnalités du noeud racine 11 et du noeud d'accès 12. Le premier lien 30 est alors inexistant.

L'équipement utilisateur 22 est constitué par un dispositif électronique apte à se connecter à n'importe lequel des noeuds d'accès 12, 14, 16, 18. A cet effet, il comprend un module radiofréquence (non représenté) permettant l'établissement de communications sans fil. Ce module radiofréquence est de préférence configuré pour permettre l'établissement de communications sans fil conformément à l'une des normes IEEE 802.11, l'équipement utilisateur 22 étant alors conforme à l'une des normes IEEE 802.11. L'équipement utilisateur 22 est par exemple constitué par un ordinateur, une télévision, une tablette ou un mobile multifonction.

Dans l'exemple représenté, l'équipement utilisateur 22 est connecté via une connexion sans fil par défaut 48 au quatrième point d'accès 18.

Le réseau de collecte 20 comprend encore un noeud de gestion 50. Dans l'exemple représenté, ce noeud de gestion 50 est intégré dans le noeud racine 11. En variante (non représenté), le noeud de gestion 50 est intégré dans l'un des noeuds d'accès 12, 14, 16, 18, par exemple le premier noeud d'accès 12, ou dans un dispositif électronique dédié. En variante encore, le noeud de gestion 50 est distribué, c'est-à-dire que ses fonctions sont distribuées entre les différents noeuds 11, 12, 14, 16, 18 du réseau de collecte 20.

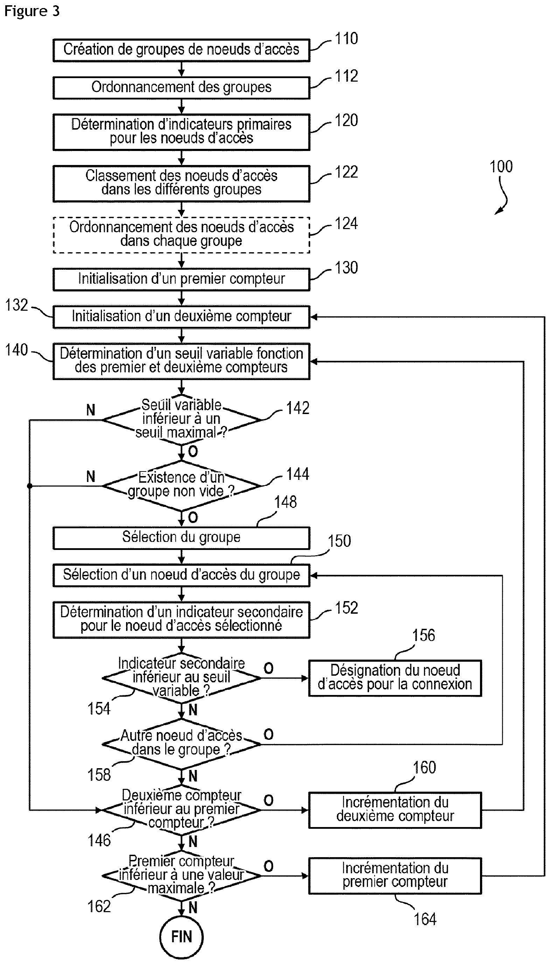

Le noeud de gestion 50 est configuré pour exécuter tout ou partie des étapes d'un procédé 100 (Figure 3) de gestion de la connexion d'un équipement utilisateur tel que l'équipement 22 au réseau de communication sans fil 10.

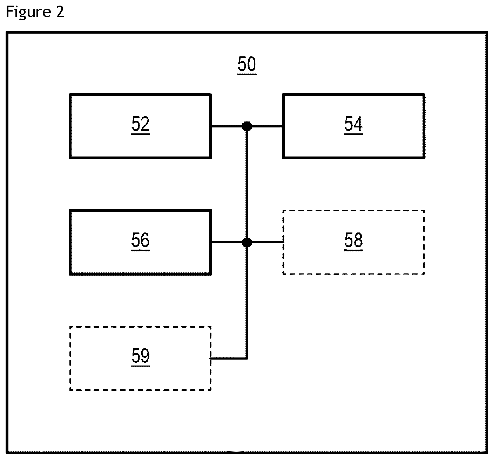

A cet effet, le noeud de gestion 50 comprend, comme visible sur la Figure 2 : un processeur ou CPU (« *Central Processing Unit »* en anglais) 52, une mémoire 54 de type RAM *(« Random Access Memory »* en anglais) et/ou ROM (« *Read Only Memory »* en anglais), et un module de stockage 56 de type stockage interne.

Le module de stockage 56 est par exemple de type disque dur HDD (« *Hard Disk Drive »* en anglais) ou SSD (« *Solid-State Drive* » en anglais), ou de type lecteur de support de stockage externe, tel un lecteur de cartes SD (« *Secure Digital* » en anglais).

Le processeur 52 est configuré pour enregistrer des données, ou informations, dans la mémoire 54 ou dans le module de stockage 56 et/ou lire des données enregistrées dans la mémoire 54 ou dans le module de stockage 56.

Le processeur 52 est configuré pour exécuter des instructions chargées dans la mémoire 54, par exemple à partir du module de stockage 56. Lorsque le noeud de gestion 50 est mis sous tension, le processeur 52 est capable de lire dans la mémoire 54 des instructions et de les exécuter. Ces instructions forment un programme d'ordinateur causant la mise en oeuvre, par le processeur 52, de tout ou partie du procédé 100. Ainsi, tout ou partie du procédé 100 peut être implémenté sous forme logicielle par exécution d'un ensemble d'instructions par une machine programmable, tel qu'un DSP (« *Digital Signal Processor* » en anglais) ou un microcontrôleur.

Les fonctions du noeud de gestion 50 peuvent ainsi être intégrées dans un noeud, par exemple un noeud racine et/ou un noeud d'accès, d'un réseau sans fil conforme à une norme 802.11 IEEE par une mise à jour d'un logiciel, c'est-à-dire par exemple par mise à jour du microprogramme (« *firmware* » en anglais) dudit noeud.

En variante (non représentée), le noeud de gestion 50 comprend une machine ou un composant dédié, tel qu'un FPGA (« *Field-Programmable Gate* Array » en anglais) ou un ASIC *(« Application-Specific Integrated Circuit »* en anglais), pour implémenter tout ou partie du procédé 100.

Dans l'exemple représenté, le noeud de gestion 50 comprend également un module réseau 58 et un module radiofréquence 59.

Le module réseau 58 est par exemple de type Ethernet. Il permet typiquement la connexion du noeud de gestion 50 à un réseau local, ici le réseau 10, et/ou Internet.

Le module radiofréquence 59 est configuré pour établir une pluralité d'interfaces radiofréquences, par exemple de type point d'accès et/ou de type utilisateur, c'est-à-dire permettant une association du noeud de gestion 50 à une interface radiofréquence dite point d'accès d'un autre dispositif électronique. Ce module radiofréquence 59 est avantageusement conforme à une norme dite Wi-Fi, par exemple la norme IEEE 802.11ac et/ou la norme IEEE 802.11ax.

Le noeud de gestion 50 est par exemple constitué par un contrôleur Wi-Fi EasyMesh^{™}.

Le procédé 100 exécuté par le noeud de gestion 50 va maintenant être décrit, en référence à la Figure 3.

Ce procédé 100 est par exemple exécuté périodiquement pour chacune des connexions d'un équipement utilisateur au réseau 10 afin de vérifier régulièrement s'il est nécessaire de transférer une connexion existante d'un équipement utilisateur sur l'un des noeuds d'accès 12, 14, 16, 18 vers un autre des noeuds d'accès 12, 14, 16, 18. Alternativement ou de façon complémentaire, le procédé 100 est déclenché par un événement prédéterminé, par exemple lors de la connexion d'un nouvel équipement utilisateur au réseau 10, ou lorsqu'un noeud d'accès 12, 14, 16, 18 détermine qu'il est en surcharge.

Ici, on imagine que l'équipement utilisateur 22 vient de se connecter au réseau 10 via le quatrième noeud d'accès 18 et que c'est cette connexion (connexion par défaut 48) qui déclenche la mise en oeuvre du procédé 100.

Le procédé 100 débute avec une étape 110 de création de groupes de noeuds d'accès, lors de laquelle le module de gestion 50 crée des groupes de noeuds d'accès. A ce stade, chaque groupe de noeuds d'accès est vide mais est associé à un intervalle caractéristique propre audit groupe. Cet intervalle caractéristique couvre une partie des valeurs possibles pour un premier indicateur primaire représentatif d'une qualité de connexion des noeuds d'accès 12, 14, 16, 18 au noeud racine 11. Les intervalles caractéristiques associés aux différents groupes sont tels que :
- ils sont deux à deux disjoints, soit en langage mathématique : V *(i,j)* ∈ *[0, N*[ *avec i ≠ j, Ii* n *Ij* = ∅, où N est le nombre de groupes, Iᵢ est l'intervalle caractéristique associé à un premier groupe et Iⱼ est l'intervalle caractéristique associé à un deuxième groupe,
- l'ensemble des intervalles caractéristiques des différents groupes recouvre l'ensemble de l'espace des valeurs possibles pour le premier indicateur primaire, soit en langage mathématique : u_{*i* ∈[0,*N*[} *Ii* = *E,* où E représente l'ensemble des valeurs du premier indicateur primaire possibles.

A l'étape 110 succède une étape 112 d'ordonnancement des groupes, lors de laquelle le noeud de gestion 50 ordonne les groupes en fonction de leurs intervalles caractéristiques. Lors de cette étape, un numéro d'ordre est attribué à chaque groupe. Si le premier indicateur primaire est tel que sa valeur augmente à mesure que la qualité de connexion est dégradée, ce numéro d'ordre va croissant à mesure que l'intervalle caractéristique associé au groupe est élevé ; en d'autres termes, pour tout groupe Gᵢ auquel est associé un intervalle caractéristique Iᵢ et tout groupe Gⱼ auquel est associé un intervalle caractéristique Iⱼ, si les valeurs comprises dans l'intervalle Iⱼ sont supérieures aux valeurs comprises dans l'intervalle Ii, alors le numéro d'ordre attribué au groupe Gⱼ est supérieur à celui attribué au groupe Gᵢ. Si le premier indicateur primaire est tel que sa valeur augmente à mesure que la qualité de connexion s'améliore, ce numéro d'ordre va décroissant à mesure que l'intervalle caractéristique associé au groupe est élevé ; en d'autres termes, pour tout groupe Gᵢ auquel est associé un intervalle caractéristique Iᵢ et tout groupe Gⱼ auquel est associé un intervalle caractéristique Iⱼ, si les valeurs comprises dans l'intervalle Iⱼ sont supérieures aux valeurs comprises dans l'intervalle Iᵢ, alors le numéro d'ordre attribué au groupe Gⱼ est inférieur à celui attribué au groupe Gᵢ.

L'étape 112 est suivie d'une étape 120 de détermination du premier indicateur primaire pour chaque noeud d'accès 12, 14, 16, 18. Lors de cette étape 120, le noeud de gestion 50 détermine le premier indicateur primaire pour chaque noeud d'accès 12, 14, 16, 18 sur la base de paramètres stables du réseau de collecte 20 connus du noeud de gestion 50 ou sur la base de paramètres variables mesurés par les noeuds d'accès 12, 14, 16, 18. Par exemple, le premier indicateur primaire est constitué par le nombre de liens 30, 32, 34, 36 constituant le chemin de collecte 40, 42, 44, 46 associé au noeud d'accès 12, 14, 16, 18 : le noeud de gestion 50 détermine alors le premier indicateur primaire pour chaque noeud d'accès 12, 14, 16, 18 sur la base de ce nombre de liens 30, 32, 34, 36, qu'il connaît. En variante, le premier indicateur primaire est constitué par, ou est fonction de, grandeurs représentatives des qualités de connexion des liens 30, 32, 34, 36 constituant le chemin de collecte 40, 42, 44, 46 associé au noeud d'accès 12, 14, 16, 18, par exemple les affaiblissements de signaux, les RSSI ou les débits maximaux mesurés, ou d'une grandeur représentative de la qualité de connexion du chemin de collecte 40, 42, 44, 46, par exemple un débit maximal mesuré entre le noeud d'accès 12, 14, 16, 18 et le noeud racine 11 : le noeud de gestion 50 interroge alors chaque noeud d'accès 12, 14, 16, 18 pour qu'il lui communique, selon le cas, une mesure de ladite grandeur représentative pour un lien ou pour un chemin de collecte et il détermine alors le premier indicateur primaire pour chaque noeud d'accès 12, 14, 16, 18 sur la base des informations retournées par les noeuds d'accès 12, 14, 16, 18.

A l'étape 120 succède une étape 122 de classement des noeuds d'accès 12, 14, 16, 18 dans les différents groupes en fonction de leur premier indicateur primaire. Lors de cette étape, le module de gestion 50 classe chaque noeud d'accès 12, 14, 16, 18 dans le groupe auquel est associé l'intervalle caractéristique dans lequel tombe le premier indicateur primaire déterminé pour ledit noeud d'accès 12, 14, 16, 18. Chaque groupe regroupe ainsi des noeuds d'accès 12, 14, 16, 18 ayant des premiers indicateurs primaires proches et chaque noeud d'accès 12, 14, 16, 18 est classé dans un unique groupe. De plus, le numéro d'ordre du groupe dans lequel est classé chaque noeud d'accès 12, 14, 16, 18 va croissant à mesure que la qualité de la connexion dudit noeud d'accès 12, 14, 16, 18 au noeud racine 11 est dégradée. Ledit numéro d'ordre constitue ainsi une donnée représentative de la qualité de connexion au noeud racine 11 des noeuds d'accès 12, 14, 16, 18 que le groupe regroupe.

Ainsi, dans l'exemple détaillé ici, le premier indicateur primaire est constitué par le nombre de liens 30, 32, 34, 36 constituant le chemin de collecte 40, 42, 44, 46 associé au noeud d'accès 12, 14, 16, 18. L'ensemble des valeurs possibles que peut prendre ce premier indicateur primaire est constitué par l'ensemble {1, 2, 3}. On fixe à 3 le nombre N de groupes et on associe à un premier groupe G₀ l'intervalle caractéristique [1, 2[, à un deuxième groupe G₁ l'intervalle caractéristique [2, 3[ et à un troisième groupe G₂ l'intervalle caractéristique [3, 4[. Le numéro d'ordre 0 est alors attribué au premier groupe Go, le numéro d'ordre 1 est attribué au deuxième groupe G₁ et le numéro d'ordre 2 est attribué au troisième groupe G₂. Par ailleurs, le premier noeud d'accès 12 est classé dans le premier groupe Go, le deuxième noeud d'accès 14 est classé dans le deuxième groupe G₁, et les troisième et quatrième noeuds d'accès 16, 18 sont classés dans le troisième groupe G₂.

Dans l'exemple représenté, le procédé 100 comprend encore, à la suite de l'étape 122, une étape 124 d'ordonnancement des noeuds d'accès 12, 14, 16, 18. Lors de cette étape 124, le noeud de gestion 50 ordonne les noeuds d'accès 16, 18 qui sont à l'intérieur d'un même groupe en fonction d'un deuxième indicateur primaire lui aussi représentatif d'une qualité de connexion des noeuds d'accès 12, 14, 16, 18 au noeud racine 11, de sorte que les noeuds d'accès 12, 14, 16, 18 soient ordonnés dans l'ordre décroissant de leur qualité de connexion. Ce deuxième indicateur primaire est par exemple constitué par, ou est fonction de, grandeurs représentatives des qualités de connexion des liens 30, 32, 34, 36 constituant le chemin de collecte 40, 42, 44, 46 associé au noeud d'accès 12, 14, 16, 18, par exemple les affaiblissements de signaux, les RSSI ou les débits maximaux mesurés, ou d'une grandeur représentative de la qualité de connexion du chemin de collecte 40, 42, 44, 46, par exemple un débit maximal mesuré entre le noeud d'accès 12, 14, 16, 18 et le noeud racine 11. Il est alors avantageusement identique au premier indicateur primaire. En variante, le deuxième indicateur primaire est constitué par le nombre de liens 30, 32, 34, 36 constituant le chemin de collecte 40, 42, 44, 46 associé au noeud d'accès 12, 14, 16, 18.

Dans l'exemple détaillé ici, le deuxième indicateur primaire est constitué par l'affaiblissement de signal mesuré entre le noeud d'accès 12, 14, 16, 18 et le noeud racine 11. L'affaiblissement de signal étant plus faible pour le troisième noeud d'accès 16 que pour le quatrième noeud d'accès 18, le troisième noeud d'accès 16 est classé avant le quatrième noeud d'accès 18.

Optionnellement, l'étape 124 comprend également une sous-étape (non représentée) d'utilisation d'un indicateur arbitraire pour ordonner les noeuds d'accès 12, 14, 16, 18 en cas d'égalité du deuxième indicateur primaire d'au moins deux noeuds d'accès 12, 14, 16, 18 d'un même groupe. Cet indicateur arbitraire est par exemple constitué par le numéro de série des noeuds d'accès 12, 14, 16, 18, les noeuds d'accès 12, 14, 16, 18 étant alors ordonnés en fonction de l'ordre alphabétique desdits numéros de série.

L'étape 124 est suivie d'une étape 130 d'initialisation d'un premier compteur. Lors de cette étape 130, le module de gestion 50 initialise le premier compteur à une première valeur d'initialisation po. Cette première valeur d'initialisation po est typiquement égale à 0.

A l'étape 130 succède une étape 132 d'initialisation d'un deuxième compteur. Lors de cette étape 132, le module de gestion 50 initialise le deuxième compteur à une deuxième valeur d'initialisation qo. Cette deuxième valeur d'initialisation qo est avantageusement égale à la première valeur d'initialisation po. Elle est typiquement égale à 0.

Le deuxième compteur est lié aux numéros d'ordre des groupes par une fonction monotone telle que la qualité de connexion au noeud racine 11 des noeuds d'accès 12, 14, 16, 18 compris dans un groupe dont le numéro d'ordre est l'image du deuxième compteur par ladite fonction monotone aille décroissante à mesure que le deuxième compteur augmente. Cette fonction monotone est ici constituée par la fonction identité.

L'étape 132 est suivie d'une étape 140 de détermination d'un seuil variable fonction des premier et deuxième compteurs. Ce seuil variable est une fonction croissante de la valeur du premier compteur. Il est de plus une fonction décroissante de la valeur du deuxième compteur. Ainsi, le seuil variable est fonction des numéros d'ordre des groupes (dans la mesure où le deuxième compteur est fonction desdits numéros d'ordre) et est une fonction croissante de la qualité de connexion des noeuds d'accès 12, 14, 16, 18 au noeud racine 11 (dans la mesure où le deuxième compteur est une fonction décroissante de la qualité de connexion des noeuds d'accès 12, 14, 16, 18 au noeud racine 11).

Ce seuil variable est de préférence égal à *S_{B}* + *(p* - *q)* × *P,* où S_{B} est un seuil minimal prédéterminé, p est la valeur du premier compteur, q est la valeur du deuxième compteur, et P est un pas fonction de la valeur du premier compteur et de la valeur du deuxième compteur. En particulier, ledit pas P est égal à *(p* - *q)* × *P*₀*,* où Po est une constante prédéterminée. En variante, le pas P est un pas prédéterminé, par exemple égal à 10 dB.

Le seuil minimal prédéterminé est par exemple égal à 60 dB.

A l'étape 140 succède une étape 142 de comparaison du seuil variable avec un seuil maximal prédéterminé. Ce seuil maximal prédéterminé est par exemple égal à 90 dB.

Si le seuil variable est strictement inférieur au seuil maximal prédéterminé, l'étape 142 est suivie d'une étape 144 de vérification de l'existence d'un groupe non-vide ayant un numéro d'ordre égal à la valeur p du deuxième compteur. Sinon, si le seuil variable est supérieur ou égal au seuil maximal prédéterminé, l'étape 142 est suivie d'une étape 146 de comparaison du deuxième compteur au premier compteur.

Lors de l'étape 144, le noeud de gestion 50 vérifie s'il existe un groupe non-vide dont le numéro d'ordre est l'image de la valeur q du deuxième compteur par la fonction monotone liant le deuxième compteur aux numéros d'ordre des groupes. Ici, cela revient à vérifier s'il existe un groupe non-vide ayant un numéro d'ordre égal à la valeur q du deuxième compteur. Si c'est le cas, l'étape 144 est suivie d'une étape 148 de sélection dudit groupe. Sinon, l'étape 144 est suivie de l'étape 146 de comparaison du deuxième compteur au premier compteur.

Lors de l'étape 148, le noeud de gestion 50 sélectionne le groupe non-vide dont le numéro d'ordre est l'image de la valeur q du deuxième compteur par la fonction monotone liant le deuxième compteur aux numéros d'ordre des groupes. Le seuil variable est ainsi fonction du numéro d'ordre du groupe sélectionné.

L'étape 148 est suivie d'une étape 150 de sélection d'un noeud d'accès 12, 14, 16, 18 dudit groupe.

Lors de l'étape 150, le noeud de gestion 50 sélectionne dans le groupe sélectionné un noeud d'accès 12, 14, 16, 18 dudit groupe, dans l'ordre déterminé lors de l'étape 124. En d'autres termes, le noeud de gestion 50 sélectionne, parmi les noeuds d'accès 12, 14, 16, 18 non encore sélectionnés du groupe lors de cette itération du premier compteur, celui qui présente le meilleur deuxième indicateur primaire.

A l'étape 150 succède une étape 152 de détermination d'un indicateur secondaire représentatif d'une qualité de connexion de l'équipement utilisateur 22 au noeud d'accès 12, 14, 16, 18 sélectionné. Cet indicateur secondaire est typiquement fonction et est par exemple constitué par l'indication de l'intensité du signal reçu (en anglais « *Received Signal Strength Indication* » ou « *RSSI* ») de l'équipement utilisateur 22 pour le noeud d'accès 12, 14, 16, 18 sélectionné. Lors de cette étape, le noeud de gestion 50 demande typiquement au noeud d'accès 12, 14, 16, 18 sélectionné de lui communiquer une mesure de ce RSSI et détermine l'indicateur secondaire en fonction du retour du noeud d'accès 12, 14, 16, 18 sélectionné.

Le procédé 100 comprend encore, à la suite de l'étape 152, une étape 154 de comparaison de l'indicateur secondaire au seuil variable. Si l'indicateur secondaire est inférieur ou égal au seuil variable, l'étape 154 est suivie d'une étape 156 de désignation du noeud d'accès 12, 14, 16, 18 sélectionné pour la connexion de l'équipement utilisateur 22 au réseau de communication sans fil distribué 10, et le procédé 300 prend fin. Le noeud de gestion 50 peut alors forcer l'équipement utilisateur à établir une connexion avec le noeud d'accès 12, 14, 16, 18 désigné en utilisant par exemple l'une des techniques décrites dans les documents FR 3 083 409 et FR 3 086 826. Sinon, si l'indicateur secondaire est strictement supérieur au seuil variable, l'étape 154 est suivie d'une étape 158 de vérification de l'existence d'un autre noeud d'accès 12, 14, 16, 18 dans le groupe ayant un numéro d'ordre égal à la valeur q du deuxième compteur.

Lors de l'étape 158, le noeud de gestion 50 vérifie s'il existe dans le groupe ayant un numéro d'ordre égal à la valeur q du deuxième compteur au moins un noeud d'accès 12, 14, 16, 18 qui n'a pas encore été sélectionné lors de cette itération sur le premier compteur. Si tel est le cas, le procédé 100 revient à l'étape 150 pour sélectionner le noeud d'accès 12, 14, 16, 18 dans l'ordre de classement interne audit groupe, de sorte à répéter les étapes 152 à 156 avec ce nouveau noeud. Sinon, l'étape 158 est suivie de l'étape 146 de comparaison du deuxième compteur au premier compteur.

Lors de l'étape 146, le noeud de gestion 50 compare la valeur q du deuxième compteur à la valeur p du premier compteur. Si la valeur q est strictement inférieure à la valeur p, l'étape 146 est suivie d'une étape 160 d'incrémentation du deuxième compteur. Sinon, l'étape 146 est suivie d'une étape 162 de comparaison du premier compteur à une valeur maximale prédéterminée.

Lors de l'étape 160, le noeud de gestion 50 incrémente le deuxième compteur. Suite à cette étape 160, le procédé revient à l'étape 140 de détermination du seuil variable, de sorte à actualiser la valeur du seuil variable en fonction de la valeur incrémentée du deuxième compteur et répéter les étapes 142 à 158 avec cette valeur actualisée.

Lors de l'étape 162, le noeud de gestion 50 compare la valeur p du premier compteur à la valeur maximale prédéterminée. Cette valeur maximale est typiquement égale au nombre N de groupes de noeuds d'accès. Si la valeur p est strictement inférieure à cette valeur maximale, l'étape 162 est suivie d'une étape 164 d'incrémentation du premier compteur. Sinon, l'étape 162 est suivie d'une étape 166 de fin du procédé 300 et de maintien de la connexion par défaut.

Lors de l'étape 164, le noeud de gestion 50 incrémente le premier compteur. Suite à cette étape 164, le procédé revient à l'étape 132 d'initialisation du deuxième compteur, de sorte à réinitialiser le deuxième compteur puis actualiser la valeur du seuil variable lors de l'étape 140 en fonction de la valeur incrémentée du premier compteur et répéter les étapes 142 à 162 avec cette valeur actualisée.

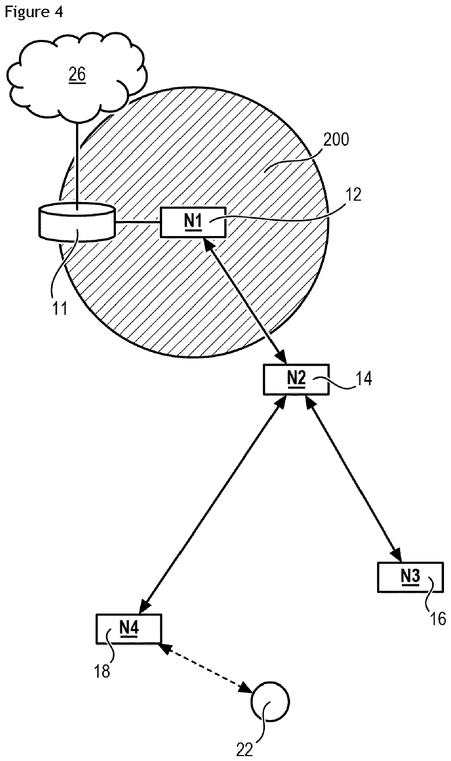

La mise en oeuvre concrète de ce procédé 100 dans le cadre de l'exemple détaillé ici va maintenant être décrite en référence aux Figures 4 à 12.

Lors de la première itération des étapes 132 à 162, la valeur du premier compteur est 0 et la valeur du deuxième compteur est 0. Le seuil variable est ainsi égal au seuil minimal, soit 60 dB, et est donc inférieur au seuil maximal. Le premier point d'accès 12 compris dans le premier groupe G₀ ayant un numéro d'ordre égal à la valeur du deuxième compteur est donc sélectionné et on compare le RSSI de l'équipement utilisateur 22 vis-à-vis du premier point d'accès 12 au seuil variable, symbolisé sur la Figure 4 par la sphère 200 délimitant la zone de l'espace à l'intérieur de laquelle le RSSI des équipements utilisateurs vis-à-vis du premier point d'accès 12 est inférieur au seuil variable. L'équipement utilisateur 22 étant hors de cette sphère 200, l'étape 156 n'est pas mise en oeuvre. Le premier point d'accès 12 étant le seul point d'accès compris dans le premier groupe Go, l'étape 154 n'est pas répétée pour un autre point d'accès, et le deuxième compteur étant égal au premier compteur, le deuxième compteur n'est pas incrémenté. Le procédé 100 va donc directement à l'étape 164 d'incrémentation du premier compteur pour une deuxième itération des étapes 132 à 162.

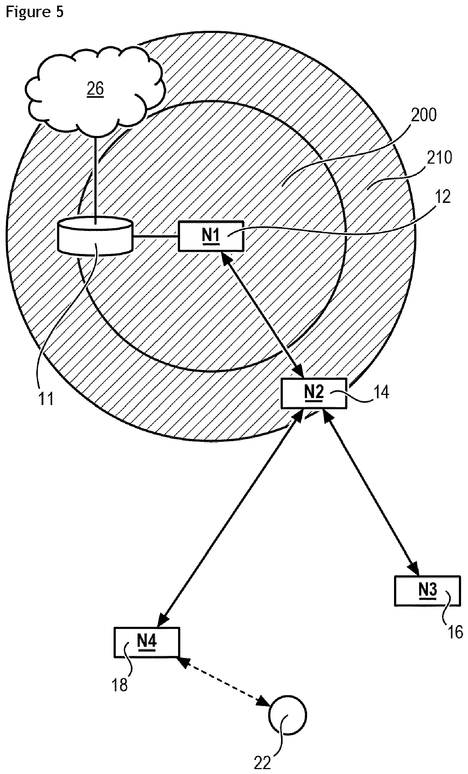

Lors de cette deuxième itération des étapes 132 à 162, la valeur du premier compteur est 1. La valeur du deuxième compteur, quant à elle, est initialement 0. Le seuil variable est ainsi initialement égal au seuil minimal S_{B} augmenté du pas P, soit 70dB, et est donc inférieur au seuil maximal. Le premier point d'accès 12 compris dans le premier groupe G₀ ayant un numéro d'ordre égal à la valeur du deuxième compteur est donc sélectionné et on compare le RSSI de l'équipement utilisateur 22 vis-à-vis du premier point d'accès 12 au seuil variable, symbolisé sur la Figure 5 par la sphère 210 délimitant la zone de l'espace à l'intérieur de laquelle le RSSI des équipements utilisateurs vis-à-vis du premier point d'accès 12 est inférieur au seuil variable. L'équipement utilisateur 22 étant hors de cette sphère 210, l'étape 156 n'est pas mise en oeuvre. Le premier point d'accès 12 étant le seul point d'accès compris dans le premier groupe Go, l'étape 154 n'est pas répétée pour un autre point d'accès.

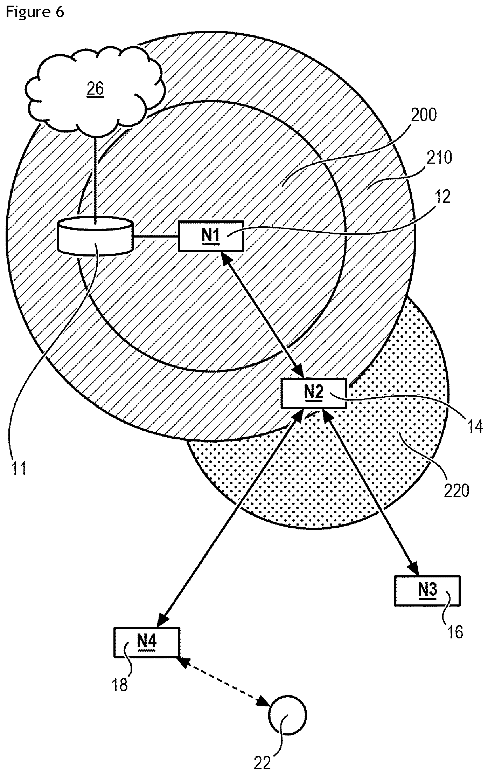

Le deuxième compteur étant inférieur au premier compteur, le deuxième compteur est ensuite incrémenté. Le procédé 100 revient donc à l'étape 140 avec le premier compteur égal à 1 et le deuxième compteur également égal à 1. Le seuil variable est ainsi égal au seuil minimal S_{B} soit 60dB, et est donc inférieur au seuil maximal. Le deuxième point d'accès 14 compris dans le deuxième groupe G₁ ayant un numéro d'ordre égal à la valeur du deuxième compteur est donc sélectionné et on compare le RSSI de l'équipement utilisateur 22 vis-à-vis du deuxième point d'accès 14 au seuil variable, symbolisé sur la Figure 6 par la sphère 220 délimitant la zone de l'espace à l'intérieur de laquelle le RSSI des équipements utilisateurs vis-à-vis du deuxième point d'accès 14 est inférieur au seuil variable. L'équipement utilisateur 22 étant hors de cette sphère 220, l'étape 156 n'est pas mise en oeuvre. Le deuxième point d'accès 14 étant le seul point d'accès compris dans le deuxième groupe G₁, l'étape 154 n'est pas répétée pour un autre point d'accès, et le deuxième compteur étant égal au premier compteur, il n'est pas davantage incrémenté. Le procédé 100 va donc directement à l'étape 164 d'incrémentation du premier compteur pour une troisième itération des étapes 132 à 162.

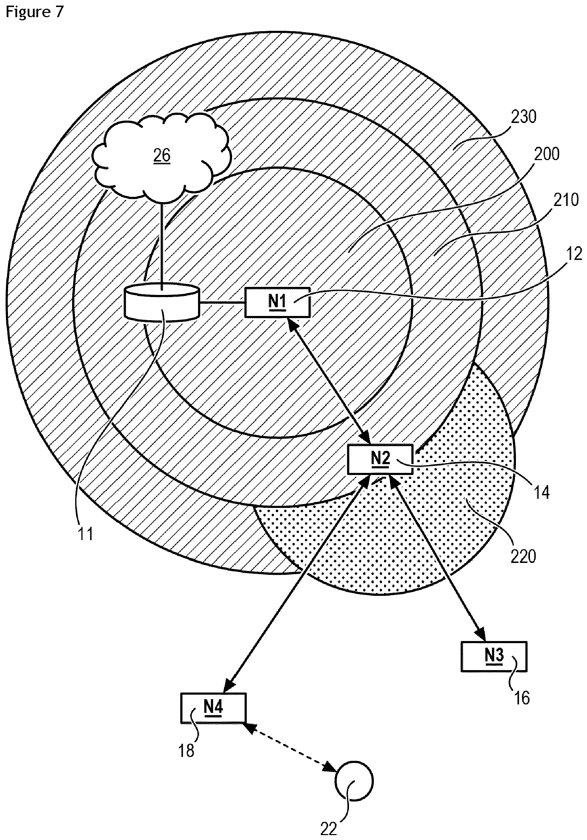

Lors de cette troisième itération des étapes 132 à 162, la valeur du premier compteur est 2. La valeur du deuxième compteur, quant à elle, est initialement 0. Le seuil variable est ainsi initialement égal au seuil minimal S_{B} augmenté de deux fois le pas P, soit 80dB, et est donc inférieur au seuil maximal. Le premier point d'accès 12 compris dans le premier groupe G₀ ayant un numéro d'ordre égal à la valeur du deuxième compteur est donc sélectionné et on compare le RSSI de l'équipement utilisateur 22 vis-à-vis du premier point d'accès 12 au seuil variable, symbolisé sur la Figure 7 par la sphère 230 délimitant la zone de l'espace à l'intérieur de laquelle le RSSI des équipements utilisateurs vis-à-vis du premier point d'accès 12 est inférieur au seuil variable. L'équipement utilisateur 22 étant hors de cette sphère 230, l'étape 156 n'est pas mise en oeuvre. Le premier point d'accès 12 étant le seul point d'accès compris dans le premier groupe Go, l'étape 154 n'est pas répétée pour un autre point d'accès.

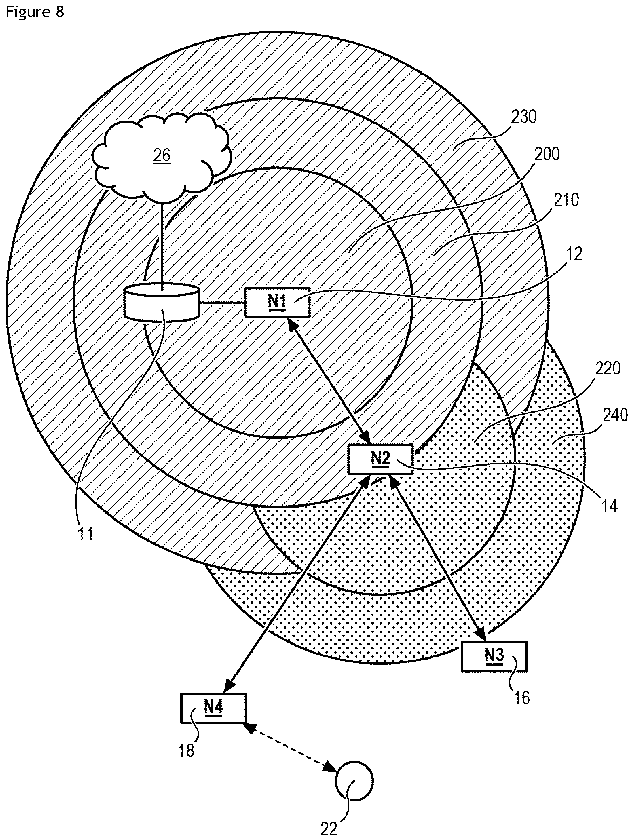

Le deuxième compteur étant inférieur au premier compteur, le deuxième compteur est ensuite incrémenté. Le procédé 100 revient donc à l'étape 140 avec le premier compteur égal à 2 et le deuxième compteur égal à 1. Le seuil variable est ainsi égal au seuil minimal S_{B} augmenté du pas P, soit 70dB, et est donc inférieur au seuil maximal. Le deuxième point d'accès 14 compris dans le deuxième groupe G₁ ayant un numéro d'ordre égal à la valeur du deuxième compteur est donc sélectionné et on compare le RSSI de l'équipement utilisateur 22 vis-à-vis du deuxième point d'accès 14 au seuil variable, symbolisé sur la Figure 8 par la sphère 240 délimitant la zone de l'espace à l'intérieur de laquelle le RSSI des équipements utilisateurs vis-à-vis du deuxième point d'accès 14 est inférieur au seuil variable. L'équipement utilisateur 22 étant hors de cette sphère 240, l'étape 156 n'est pas mise en oeuvre. Le deuxième point d'accès 14 étant le seul point d'accès compris dans le deuxième groupe G₁, l'étape 154 n'est pas répétée pour un autre point d'accès.

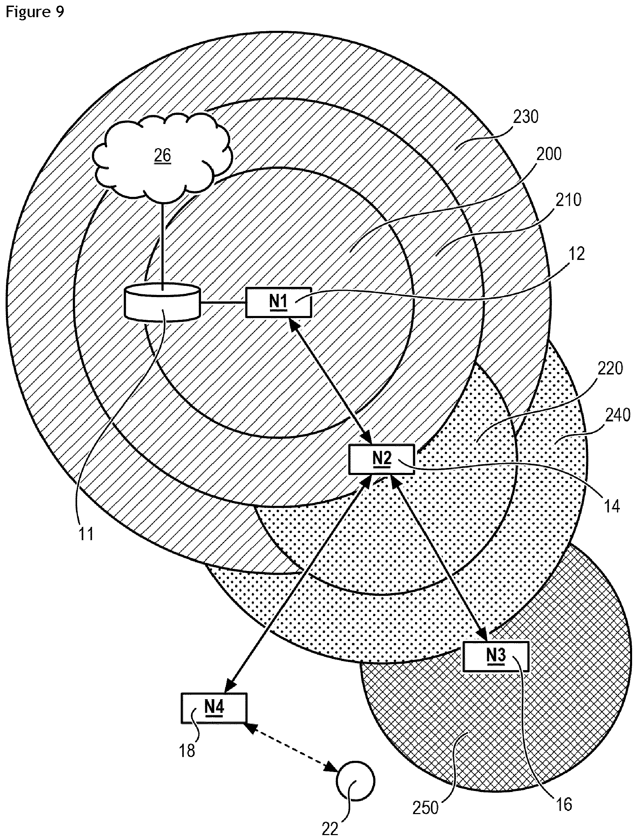

Le deuxième compteur étant toujours inférieur au premier compteur, le deuxième compteur est ensuite incrémenté. Le procédé 100 revient donc à l'étape 140 avec le premier compteur égal à 2 et le deuxième compteur également égal à 2. Le seuil variable est ainsi égal au seuil minimal S_{B} soit 60dB, et est donc inférieur au seuil maximal. Le troisième point d'accès 16 étant le point d'accès ayant le numéro d'ordre le plus élevé dans le troisième groupe G₂ qui a un numéro d'ordre égal à la valeur du deuxième compteur, il est sélectionné et on compare le RSSI de l'équipement utilisateur 22 vis-à-vis du troisième point d'accès 16 au seuil variable, symbolisé sur la Figure 9 par la sphère 250 délimitant la zone de l'espace à l'intérieur de laquelle le RSSI des équipements utilisateurs vis-à-vis du troisième point d'accès 16 est inférieur au seuil variable. L'équipement utilisateur 22 étant hors de cette sphère 220, l'étape 156 n'est pas mise en oeuvre.

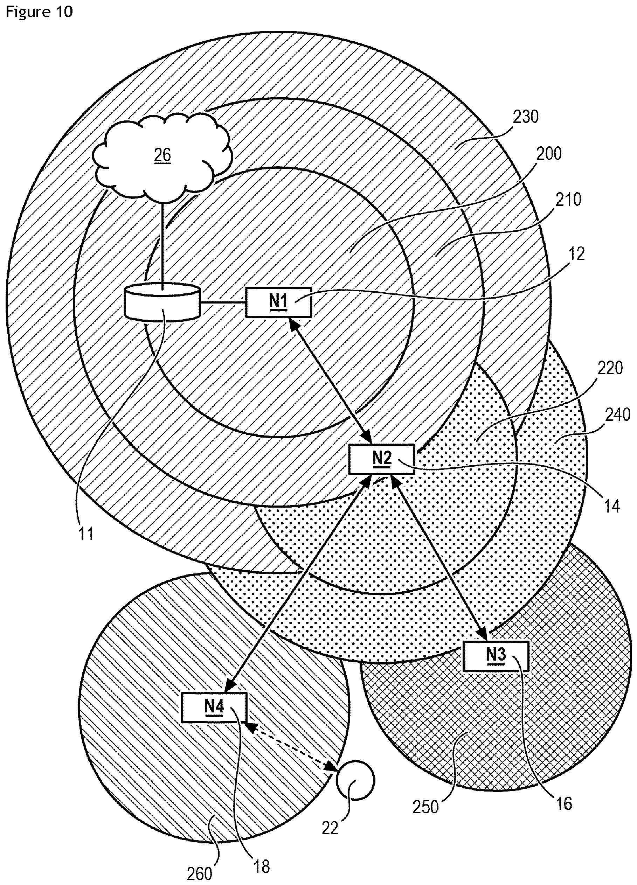

Le quatrième point d'accès 18 étant également compris dans le troisième groupe G₂, l'étape 154 est répétée pour cet autre point d'accès. On compare donc le RSSI de l'équipement utilisateur 22 vis-à-vis du quatrième point d'accès 18 au seuil variable, symbolisé sur la Figure 10 par la sphère 260 délimitant la zone de l'espace à l'intérieur de laquelle le RSSI des équipements utilisateurs vis-à-vis du quatrième point d'accès 18 est inférieur au seuil variable. L'équipement utilisateur 22 étant hors de cette sphère 260, l'étape 156 n'est pas mise en oeuvre.

Le troisième groupe G₂ ne comprenant pas d'autre point d'accès, l'étape 154 n'est pas de nouveau répétée. De plus, le deuxième compteur étant maintenant égal au premier compteur, il n'est pas davantage incrémenté. Le procédé 100 va donc directement à l'étape 164 d'incrémentation du premier compteur pour une quatrième itération des étapes 132 à 162.

Lors de cette quatrième itération des étapes 132 à 162, la valeur du premier compteur est 3. La valeur du deuxième compteur, quant à elle, est initialement 0. Le seuil variable est ainsi initialement égal au seuil minimal S_{B} augmenté de trois fois le pas P, soit 90dB, et est donc égal au seuil maximal. Le procédé 100 va donc directement à l'étape 160 d'incrémentation du deuxième compteur, sans comparer le RSSI de l'équipement utilisateur 22 vis-à-vis du premier point d'accès 12 au seuil variable.

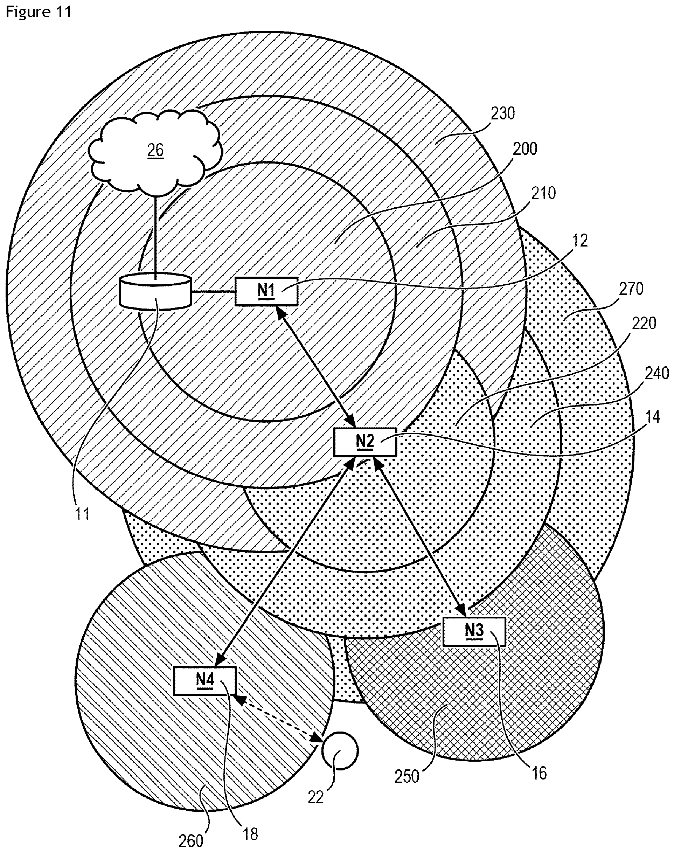

Le procédé 100 revient donc à l'étape 140 avec le premier compteur égal à 3 et le deuxième compteur égal à 1. Le seuil variable est ainsi égal au seuil minimal S_{B} augmenté de deux fois le pas P, soit 80dB, et est donc inférieur au seuil maximal. Le deuxième point d'accès 14 compris dans le deuxième groupe G₁ ayant un numéro d'ordre égal à la valeur du deuxième compteur est donc sélectionné et on compare le RSSI de l'équipement utilisateur 22 vis-à-vis du deuxième point d'accès 14 au seuil variable, symbolisé sur la Figure 11 par la sphère 270 délimitant la zone de l'espace à l'intérieur de laquelle le RSSI des équipements utilisateurs vis-à-vis du deuxième point d'accès 14 est inférieur au seuil variable. L'équipement utilisateur 22 étant hors de cette sphère 270, l'étape 156 n'est pas mise en oeuvre. Le deuxième point d'accès 14 étant le seul point d'accès compris dans le deuxième groupe G₁, l'étape 154 n'est pas répétée pour un autre point d'accès.

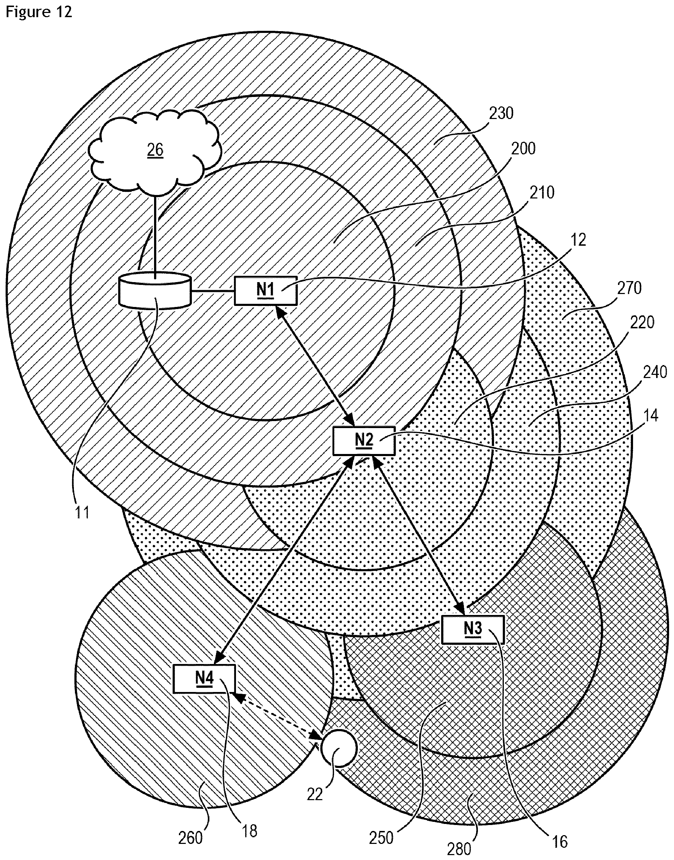

Le deuxième compteur étant toujours inférieur au premier compteur, le deuxième compteur est à nouveau incrémenté. Le procédé 100 revient donc à l'étape 140 avec le premier compteur égal à 3 et le deuxième compteur égal à 2. Le seuil variable est ainsi égal au seuil minimal S_{B} augmenté du pas P, soit 70dB, et est donc inférieur au seuil maximal. Le troisième point d'accès 16 étant le point d'accès ayant le numéro d'ordre le plus élevé dans le troisième groupe G₂ qui a un numéro d'ordre égal à la valeur du deuxième compteur, il est sélectionné et on compare le RSSI de l'équipement utilisateur 22 vis-à-vis du troisième point d'accès 16 au seuil variable, symbolisé sur la Figure 12 par la sphère 280 délimitant la zone de l'espace à l'intérieur de laquelle le RSSI des équipements utilisateurs vis-à-vis du troisième point d'accès 16 est inférieur au seuil variable. L'équipement utilisateur 22 étant compris dans cette sphère 220, le troisième point d'accès 16 est désigné pour la connexion de l'équipement utilisateur 22 et le procédé 300 prend fin. L'équipement utilisateur 22 devra donc couper sa connexion par défaut 48 avec le quatrième point d'accès 18 et établir une nouvelle connexion avec le troisième point d'accès 16.

Grâce aux modes de réalisation décrits ci-dessus, il est ainsi possible d'optimiser de manière très efficace la connexion des équipements utilisateurs au réseau de communication sans fil distribué 10 de manière à maximiser la qualité de la connexion de ces équipements utilisateurs.

## Revendications

1. Procédé (100) de gestion de la connexion d'un équipement utilisateur (22) à un réseau de communication sans fil distribué (10), ledit réseau de communication sans fil distribué (10) comprenant un noeud racine (11), une pluralité de noeuds d'accès (12, 14, 16, 18) chacun apte à établir une connexion sans fil avec l'équipement utilisateur (22), et un réseau de collecte (20) pour l'acheminement de données entre le noeud racine (11) et les noeuds d'accès (12, 14, 16, 18), le procédé de gestion (100) comprenant les étapes suivantes :
• a) classement (122) des noeuds d'accès (12, 14, 16, 18) dans différents groupes en fonction d'un indicateur primaire représentatif de leur qualité de connexion au noeud racine (11), chaque groupe regroupant des noeuds d'accès (12, 14, 16, 18) ayant des indicateurs primaires compris dans un intervalle caractéristique associé au groupe et disjoint de l'intervalle caractéristique associé à chaque autre groupe,
• b) sélection (148) d'un premier groupe parmi lesdits groupes, et
pour au moins un noeud d'accès (12, 14, 16, 18) compris dans le groupe sélectionné :
• c) détermination (152) d'un indicateur secondaire associé audit noeud d'accès (12, 14, 16, 18), ledit indicateur secondaire étant représentatif d'une qualité de connexion de l'équipement utilisateur (22) au noeud d'accès (12, 14, 16, 18),
• d) comparaison (154) de l'indicateur secondaire à un seuil, et
si l'indicateur secondaire est inférieur ou égal au seuil :
• e) désignation (156) du noeud d'accès (12, 14, 16, 18) pour la connexion de l'équipement utilisateur (22) au réseau de communication sans fil distribué (10),
si, pour chaque noeud d'accès (12, 14, 16, 18) compris dans le groupe sélectionné, l'indicateur secondaire est strictement supérieur au seuil :
• f) répétition des étapes b) à e) avec un deuxième groupe regroupant des noeuds d'accès (12, 14, 16, 18) ayant une qualité de connexion au noeud racine (11) moindre que celle des noeuds d'accès (12, 14, 16, 18) du premier groupe.

2. Procédé de gestion (100) selon la revendication 1, dans lequel est associée à chaque groupe une donnée représentative de la qualité de connexion au noeud racine (11) des noeuds d'accès (12, 14, 16, 18) qu'il regroupe, et le seuil est un seuil variable qui est fonction de la donnée représentative associée au groupe auquel appartient le noeud d'accès (12, 14, 16, 18).

3. Procédé de gestion (100) selon la revendication 2, dans lequel le seuil variable est une fonction croissante de la qualité de connexion des noeuds d'accès (12, 14, 16, 18) au noeud racine (11).

4. Procédé de gestion (100) selon l'une quelconque des revendications précédentes, comprenant les étapes supplémentaires suivantes :
• g) initialisation (130) d'un premier compteur à une première valeur d'initialisation,
• h) détermination (140) du seuil, le seuil étant un seuil variable fonction du premier compteur, et
si, pour une valeur donnée du premier compteur, l'indicateur secondaire associé à chaque noeud d'accès (12, 14, 16, 18) de chaque groupe sélectionné est strictement supérieur au seuil :
• i) incrémentation (164) du premier compteur, et
• j) répétition des étapes h), b) à f) et i) avec la valeur incrémentée du premier compteur.

5. Procédé de gestion (100) selon la revendication 4, comprenant, préalablement à l'étape i), une étape m) de comparaison (162) de la valeur du premier compteur à une valeur maximale prédéterminée, l'étape i) n'étant mise en oeuvre que si la valeur du premier compteur est strictement inférieure à la valeur maximale.

6. Procédé de gestion (100) selon la revendication 4 ou 5, comprenant les étapes supplémentaires suivantes :
• n) initialisation (132) d'un deuxième compteur à une deuxième valeur d'initialisation, et
• o) préalablement à l'étape f) de répétition des étapes b) à e), incrémentation (160) du deuxième compteur,
l'étape n) étant répétée lors de la mise en oeuvre de l'étape j),
le deuxième compteur étant lié aux données représentatives associées aux groupes par une fonction monotone telle que la qualité de connexion des noeuds d'accès (12, 14, 16, 18) au noeud racine (11) aille décroissante à mesure que le deuxième compteur augmente, l'étape b) de sélection (148) de groupe comprenant la sélection d'un groupe dont la donnée représentative est l'image de la valeur du deuxième compteur par ladite fonction monotone.

7. Procédé de gestion (100) selon la revendication 6 comprenant, préalablement à l'étape o) d'incrémentation (160) du deuxième compteur, une étape p) de comparaison (146) de la valeur du deuxième compteur à la valeur du premier compteur, les étapes o) d'incrémentation (160) du deuxième compteur et f) de répétition des étapes b) à e) n'étant mises en oeuvre que lorsque la valeur du deuxième compteur est strictement inférieure à la valeur du premier compteur, ladite étape p) de comparaison (146) étant sinon suivie de l'étape i) d'incrémentation (164) du premier compteur ou, le cas échéant, de l'étape m) de comparaison (162) de la valeur du premier compteur à la valeur maximale prédéterminée.

8. Procédé de gestion (100) selon la revendication 6 ou 7, dans lequel le seuil variable est une fonction croissante de la valeur du premier compteur.

9. Procédé de gestion (100) selon l'une quelconque des revendications 2 à 8, comprenant, préalablement à l'étape b) de sélection (148), une étape q) de comparaison (142) du seuil variable avec un seuil maximal prédéterminé, les étapes b) à e) n'étant mises en oeuvre que lorsque le seuil variable est strictement inférieur au seuil maximal prédéterminé, ladite étape q) de comparaison étant sinon suivie de l'étape f) de répétition des étapes b) à e) ou, le cas échéant, de l'étape o) d'incrémentation (160) du deuxième compteur ou, le cas échéant, de l'étape p) de comparaison (146) de la valeur du deuxième compteur à la valeur du premier compteur.

10. Procédé de gestion (100) selon l'une quelconque des revendications précédentes, dans lequel chaque noeud d'accès (12, 14, 16, 18) est classé dans un unique groupe.

11. Procédé de gestion (100) selon l'une quelconque des revendications précédentes, exécuté par un noeud de gestion (50) du réseau de communication sans fil distribué (10).

12. Noeud de gestion (50) d'un réseau de communication sans fil distribué (10), ledit réseau de communication sans fil distribué (10) comprenant un noeud racine (11), une pluralité de noeuds d'accès (12, 14, 16, 18) chacun apte à établir une connexion sans fil avec un équipement utilisateur (22), et un réseau de collecte (20) pour l'acheminement de données entre le noeud racine (11) et les noeuds d'accès (12, 14, 16, 18), le noeud de gestion (50) étant configuré pour exécuter les étapes d'un procédé de gestion (100) selon l'une quelconque des revendications 1 à 11.

13. Réseau de communication sans fil distribué (10) comprenant un noeud racine (11), une pluralité de noeuds d'accès (12, 14, 16, 18) chacun apte à établir une connexion sans fil avec un équipement utilisateur (22), et un réseau de collecte (20) pour l'acheminement de données entre le noeud racine (11) et les noeuds d'accès (12, 14, 16, 18), le noeud racine (11) et/ou les noeuds d'accès (12, 14, 16, 18) comprenant un noeud de gestion (50) configuré pour exécuter les étapes d'un procédé de gestion (100) selon l'une quelconque des revendications 1 à 11.

14. Produit programme d'ordinateur comprenant des instructions pour la mise en oeuvre, par un processeur (52) d'un noeud de gestion (50) d'un réseau de communication sans fil distribué (10) comprenant un noeud racine (11), une pluralité de noeuds d'accès (12, 14, 16, 18) chacun apte à établir une connexion sans fil avec un équipement utilisateur (22), et un réseau de collecte (20) pour l'acheminement de données entre le noeud racine (11) et les noeuds d'accès (12, 14, 16, 18), d'un procédé de gestion (100) selon l'une quelconque des revendications 1 à 11 lorsque le produit programme d'ordinateur est exécuté par le processeur (52).

15. Support d'enregistrement lisible par un ordinateur sur lequel est stocké un produit programme d'ordinateur selon la revendication 14.

## Patentansprüche

1. Verfahren (100) zur Verwaltung der Verbindung einer Benutzerausrüstung (22) zu einem verteilten Drahtloskommunikationsnetzwerk (10), wobei das verteilte Drahtloskommunikationsnetzwerk (10) einen Wurzelknoten (11), eine Vielzahl von Zugangsknoten (12, 14, 16, 18), die jeweils in der Lage sind, eine Drahtlosverbindung mit der Benutzerausrüstung (22) herzustellen, und ein Backhaul-Netzwerk (20) für das Routing von Daten zwischen dem Wurzelknoten (11) und den Zugangsknoten (12, 14, 16, 18) umfasst, wobei das Verwaltungsverfahren (100) die folgenden Schritte umfasst:
- a) Einordnen (122) der Zugangsknoten (12, 14, 16, 18) in Abhängigkeit von einem Primärindikator, der für ihre Verbindungsqualität zum Wurzelknoten (11) repräsentativ ist, in unterschiedliche Gruppen, wobei jede Gruppe Zugangsknoten (12, 14, 16, 18) zusammenfasst, die Primärindikatoren aufweisen, welche in einem charakteristischen Intervall umfasst sind, das der Gruppe zugeordnet ist und von dem charakteristischen Intervall, das jeder anderen Gruppe zugeordnet ist, disjunkt ist,
- b) Auswählen (148) einer ersten Gruppe aus den Gruppen, und
bei mindestens einem Zugangsknoten (12, 14, 16, 18), der in der ausgewählten Gruppe umfasst ist:
- c) Bestimmen (152) eines Sekundärindikators, der dem Zugangsknoten (12, 14, 16, 18) zugeordnet ist, wobei der Sekundärindikator für eine Verbindungsqualität der Benutzerausrüstung (22) zum Zugangsknoten (12, 14, 16, 18) repräsentativ ist,
- d) Vergleichen (154) des Sekundärindikators mit einer Schwelle, und
wenn der Sekundärindikator kleiner oder gleich der Schwelle ist:
- e) Ernennen (156) des Zugangsknotens (12, 14, 16, 18) für die Verbindung der Benutzerausrüstung (22) zum verteilten Drahtloskommunikationsnetzwerk (10),
wenn bei jedem Zugangsknoten (12, 14, 16, 18), der in der ausgewählten Gruppe umfasst ist, der Sekundärindikator strikt größer ist als die Schwelle:
- f) Wiederholen der Schritte b) bis e) mit einer zweiten Gruppe, die Zugangsknoten (12, 14, 16, 18) zusammenfasst, die eine Verbindungsqualität zum Wurzelknoten (11) aufweisen, die geringer ist als die der Zugangsknoten (12, 14, 16, 18) der ersten Gruppe.

2. Verwaltungsverfahren (100) nach Anspruch 1, wobei jeder Gruppe ein Datenelement zugeordnet ist, das für die Verbindungsqualität zum Wurzelknoten (11) der Zugangsknoten (12, 14, 16, 18), welche sie zusammenfasst, repräsentativ ist, und die Schwelle eine variable Schwelle ist, die von dem repräsentativen Datenelement, das der Gruppe zugeordnet ist, welcher der Zugangsknoten (12, 14, 16, 18) angehört, abhängig ist.

3. Verwaltungsverfahren (100) nach Anspruch 2, wobei die variable Schwelle eine steigende Funktion der Verbindungsqualität der Zugangsknoten (12, 14, 16, 18) zum Wurzelknoten (11) ist.

4. Verwaltungsverfahren (100) nach einem der vorstehenden Ansprüche, das die folgenden zusätzlichen Schritte umfasst:
- g) Initialisieren (130) eines ersten Zählers auf einen ersten Initialisierungswert,
- h) Bestimmen (140) der Schwelle, wobei die Schwelle eine variable Schwelle ist, die vom ersten Zähler abhängig ist, und
wenn bei einem gegebenen Wert des ersten Zählers der Sekundärindikator, der jedem Zugangsknoten (12, 14, 16, 18) jeder ausgewählten Gruppe zugeordnet ist, strikt größer ist als die Schwelle:
- i) Inkrementieren (164) des ersten Zählers, und
- j) Wiederholen der Schritte h), b) bis f) und i) mit dem inkrementierten Wert des ersten Zählers.

5. Verwaltungsverfahren (100) nach Anspruch 4, das vor dem Schritt i) einen Schritt m) eines Vergleichens (162) des Werts des ersten Zählers mit einem vorbestimmten Maximalwert umfasst, wobei der Schritt i) nur dann durchgeführt wird, wenn der Wert des ersten Zählers strikt kleiner ist als der Maximalwert.

6. Verwaltungsverfahren (100) nach Anspruch 4 oder 5, das die folgenden zusätzlichen Schritte umfasst:
- n) Initialisieren (132) eines zweiten Zählers auf einen zweiten Initialisierungswert, und
- o) vor dem Schritt f) des Wiederholens der Schritte b) bis e), Inkrementieren (160) des zweiten Zählers,
wobei der Schritt n) bei der Durchführung des Schritts j) wiederholt wird,
wobei der zweite Zähler mit den repräsentativen Daten, die den Gruppen zugeordnet sind, durch eine monotone Funktion derart verknüpft ist, dass die Verbindungsqualität der Zugangsknoten (12, 14, 16, 18) zum Wurzelknoten (11) mit zunehmendem zweiten Zähler abnimmt, wobei der Schritt b) des Auswählens (148) einer Gruppe das Auswählen einer Gruppe umfasst, deren repräsentatives Datenelement die Abbildung des Werts des zweiten Zählers durch die monotone Funktion ist.

7. Verwaltungsverfahren (100) nach Anspruch 6, das vor dem Schritt o) des Inkrementierens (160) des zweiten Zählers einen Schritt p) eines Vergleichens (146) des Werts des zweiten Zählers mit dem Wert des ersten Zählers umfasst, wobei die Schritte o) des Inkrementierens (160) des zweiten Zählers und f) des Wiederholens der Schritte b) bis e) nur dann durchgeführt werden, wenn der Wert des zweiten Zählers strikt kleiner ist als der Wert des ersten Zählers, wobei dem Schritt p) des Vergleichens (146) andernfalls der Schritt i) des Inkrementierens (164) des ersten Zählers oder gegebenenfalls der Schritt m) des Vergleichens (162) des Werts des ersten Zählers mit dem vorbestimmten Maximalwert folgt.

8. Verwaltungsverfahren (100) nach Anspruch 6 oder 7, wobei die variable Schwelle eine steigende Funktion des Werts des ersten Zählers ist.

9. Verwaltungsverfahren (100) nach einem der Ansprüche 2 bis 8, das vor dem Schritt b) des Auswählens (148) einen Schritt q) eines Vergleichens (142) der variablen Schwelle mit einer vorbestimmten Maximalschwelle umfasst, wobei die Schritte b) bis e) nur dann durchgeführt werden, wenn die variable Schwelle strikt kleiner ist als die vorbestimmte Maximalschwelle, wobei dem Schritt q) des Vergleichens andernfalls der Schritt f) des Wiederholens der Schritte b) bis e) oder gegebenenfalls der Schritt o) des Inkrementierens (160) des zweiten Zählers oder gegebenenfalls der Schritt p) des Vergleichens (146) des Werts des zweiten Zählers mit dem Wert des ersten Zählers folgt.

10. Verwaltungsverfahren (100) nach einem der vorstehenden Ansprüche, wobei jeder Zugangsknoten (12, 14, 16, 18) in eine einzige Gruppe eingeordnet wird.

11. Verwaltungsverfahren (100) nach einem der vorstehenden Ansprüche, das von einem Verwaltungsknoten (50) des verteilten Drahtloskommunikationsnetzwerks (10) ausgeführt wird.

12. Verwaltungsknoten (50) für ein verteiltes Drahtloskommunikationsnetzwerk (10), wobei das verteilte Drahtloskommunikationsnetzwerk (10) einen Wurzelknoten (11), eine Vielzahl von Zugangsknoten (12, 14, 16, 18), die jeweils in der Lage sind, eine Drahtlosverbindung mit einer Benutzerausrüstung (22) herzustellen, und ein Backhaul-Netzwerk (20) für das Routing von Daten zwischen dem Wurzelknoten (11) und den Zugangsknoten (12, 14, 16, 18) umfasst, wobei der Verwaltungsknoten (50) so konfiguriert ist, dass er die Schritte eines Verwaltungsverfahrens (100) nach einem der Ansprüche 1 bis 11 ausführt.

13. Verteiltes Drahtloskommunikationsnetzwerk (10), das einen Wurzelknoten (11), eine Vielzahl von Zugangsknoten (12, 14, 16, 18), die jeweils in der Lage sind, eine Drahtlosverbindung mit einer Benutzerausrüstung (22) herzustellen, und ein Backhaul-Netzwerk (20) für das Routing von Daten zwischen dem Wurzelknoten (11) und den Zugangsknoten (12, 14, 16, 18) umfasst, wobei der Wurzelknoten (11) und/oder die Zugangsknoten (12, 14, 16, 18) einen Verwaltungsknoten (50) umfassen, der so konfiguriert ist, dass er die Schritte eines Verwaltungsverfahrens (100) nach einem der Ansprüche 1 bis 11 ausführt.

14. Computerprogrammprodukt, das Anweisungen für die Durchführung, durch einen Prozessor (52) eines Verwaltungsknotens (50) eines verteilten Drahtloskommunikationsnetzwerks (10), das einen Wurzelknoten (11), eine Vielzahl von Zugangsknoten (12, 14, 16, 18), die jeweils in der Lage sind, eine Drahtlosverbindung mit einer Benutzerausrüstung (22) herzustellen, und ein Backhaul-Netzwerk (20) für das Routing von Daten zwischen dem Wurzelknoten (11) und den Zugangsknoten (12, 14, 16, 18) umfasst, eines Verwaltungsverfahrens (100) nach einem der Ansprüche 1 bis 11 wenn das Computerprogrammprodukt durch den Prozessor (52) ausgeführt wird, umfasst.

15. Durch einen Computer lesbares Aufzeichnungsmedium, auf dem ein Computerprogrammprodukt nach Anspruch 14 gespeichert ist.

## Claims

1. A managing method (100) for managing the connection of a user equipment item (22) to a distributed wireless communication network (10), said distributed wireless communication network (10) comprising a root node (11), a plurality of access nodes (12, 14, 16, 18) each able to set up a wireless connection with the user equipment item (22), and a backhaul network (20) for conveying data between the root node (11) and the access nodes (12, 14, 16, 18), the managing method (100) comprising the following steps:
• a) sorting (122) the access nodes (12, 14, 16, 18) into different groups as a function of a primary indicator representative of their quality of connection to the root node (11), each group containing access nodes (12, 14, 16, 18) having primary indicators included in a characteristic interval associated with the group and distinct from the characteristic interval associated with each other group.
• b) selecting (148) a first group from among said groups, and
for at least one access node (12, 14, 16, 18) included in the selected group:
• c) determining (152) a secondary indicator associated with said access node (12, 14, 16, 18), said secondary indicator being representative of a quality of connection of the user equipment item (22) to the access node (12, 14, 16, 18),
• d) comparing (154) the secondary indicator to a threshold, and
if the secondary indicator is less than or equal to the threshold:
• e) designating (156) the access node (12, 14, 16, 18) for the connection of the user equipment item (22) to the distributed wireless communication network (10),
if, for each access node (12, 14, 16, 18) included in the selected group, the secondary indicator is strictly greater than the threshold:
• f) repeating steps b) to e) with a second group containing access nodes (12, 14, 16, 18) having a quality of connection to the root node (11) which is lower than that of the access nodes (12, 14, 16, 18) of the first group.

2. The managing method (100) as claimed in claim 1, wherein each group has an associated datum representative of the quality of connection to the root node (11) of the access nodes (12, 14, 16, 18) it contains, and the threshold is a variable threshold which varies as a function of the representative datum associated with the group to which the access node (12, 14, 16, 18) belongs.

3. The managing method (100) as claimed in claim 2, wherein the variable threshold is an increasing function of the quality of connection of the access nodes (12, 14, 16, 18) to the root node (11).

4. The managing method (100) as claimed in any of the preceding claims, comprising the following additional steps:
• g) initializing (130) a first counter to a first initialization value,
• h) determining (140) the threshold, the threshold being a variable threshold which varies as a function of the first counter, and
if, for a given value of the first counter, the secondary indicator associated with each access node (12, 14, 16, 18) of each selected group is strictly greater than the threshold:
• i) incrementing (164) the first counter, and
• j) repeating steps h), b) to f) and i) with the incremented value of the first counter.

5. The managing method (100) as claimed in claim 4, comprising, prior to the step i), a step m) of comparing (162) the value of the first counter to a given maximum value, the step i) only being implemented if the value of the first counter is strictly less than the maximum value.

6. The managing method (100) as claimed in claim 4 or 5, comprising the following additional steps:
• n) initializing (132) a second counter to a second initialization value, and
• o) prior to the step f) of repeating steps b) to e), incrementing (160) the second counter,
the step n) being repeated during the implementation of the step j),
the second counter being related to the representative data associated with the groups by a monotonic function such that the quality of connection of the access nodes (12, 14, 16, 18) to the root node (11) decreases as the second counter increases, the step b) of selecting (148) a group comprising the selection of a group, the representative datum of which is the image of the value of the second counter by said monotonic function.

7. The managing method (100) as claimed in claim 6 comprising, prior to the step o) of incrementing (160) the second counter, a step p) of comparing (146) the value of the second counter to the value of the first counter, the steps o) of incrementing (160) the second counter and f) of repeating steps b) to e) being implemented only when the value of the second counter is strictly less than the value of the first counter, said comparing (146) step p) being otherwise followed by the step i) of incrementing (164) the first counter or, where applicable, by the step m) of comparing (162) the value of the first counter to the given maximum value.

8. The managing method (100) as claimed in claim 6 or 7, wherein the variable threshold is an increasing function of the value of the first counter.

9. The managing method (100) as claimed in any of claims 2 to 8, comprising, prior to the selecting (148) step b), a step q) of comparing (142) the variable threshold to a given maximum threshold, the steps b) to e) being implemented only when the variable threshold is strictly less than the given maximum threshold, said comparing step q) being otherwise followed by the step f) of repeating steps b) to e) or, where applicable, the step o) of incrementing (160) the second counter or, where applicable, the step p) of comparing (146) the value of the second counter to the value of the first counter.

10. The managing method (100) as claimed in any of the preceding claims, wherein each access node (12, 14, 16, 18) is sorted into a single group.

11. The managing method (100) as claimed in any of the preceding claims, executed by a managing node (50) of the distributed wireless communication network (10).

12. A managing node (50) of a distributed wireless communication network (10), said distributed wireless communication network (10) comprising a root node (11), a plurality of access nodes (12, 14, 16, 18) each able to set up a wireless connection with a user equipment item (22), and a backhaul network (20) for conveying data between the root node (11) and the access nodes (12, 14, 16, 18), the managing node (50) being configured to execute the steps of a managing method (100) as claimed in any of claims 1 to 11.

13. A distributed wireless communication network (10) comprising a root node (11), a plurality of access nodes (12, 14, 16, 18) each able to set up a wireless connection with a user equipment item (22), and a backhaul network (20) for conveying data between the root node (11) and the access nodes (12, 14, 16, 18), the root node (11) and/or the access nodes (12, 14, 16, 18) comprising a managing node (50) configured to execute the steps of a managing method (100) as claimed in any of claims 1 to 11.

14. A computer program product comprising instructions for implementing, by a processor (52) of a managing node (50) of a distributed wireless communication network (10) comprising a root node (11), a plurality of access nodes (12, 14, 16, 18) each able to set up a wireless connection with a user equipment item (22), and a backhaul network (20) for conveying data between the root node (11) and the access nodes (12, 14, 16, 18), a managing method (100) as claimed in any of claims 1 to 11 when said computer program product is executed by the processor (52).

15. A recording medium readable by a computer on which is stored a computer program product as claimed in claim 14.
